# EUROPÄISCHE PATENTSCHRIFT

(11) **EP 3 212 911 B1**
(45) Veröffentlichungstag und Bekanntmachung des Hinweises auf die Patenterteilung: **04.04.2018**
(21) Anmeldenummer: 15787898.4
(22) Anmeldetag: 24.10.2015
(51) Int. Cl.: F02B 37/18, F16K 3/22, F16K 5/06, F16K 5/20, F16K 27/06

(54) **ABGASTURBOLADER FÜR EINE BRENNKRAFTMASCHINE SOWIE VERFAHREN ZUM HERSTELLEN EINES ABGASTURBOLADERS**
EXHAUST-GAS TURBOCHARGER FOR AN INTERNAL COMBUSTION ENGINE, AND METHOD FOR PRODUCING AN EXHAUST-GAS TURBOCHARGER
TURBOCOMPRESSEUR DE GAZ D'ÉCHAPPEMENT D'UN MOTEUR À COMBUSTION INTERNE ET PROCÉDÉ DE FABRICATION D'UN TURBOCOMPRESSEUR DE GAZ D'ÉCHAPPEMENT

(30) Priorität: 27.10.2014 DE 102014015882
(43) Veröffentlichungstag der Anmeldung: 06.09.2017
(73) Patentinhaber: AUDI AG, 85045 Ingolstadt (DE)
(72) Erfinder: LINDNER, Marko, 85110 Kipfenberg (DE); BÄUMEL, Franz, 85110 Kipfenberg (DE); KÖHNLEIN, Maximilian, 85139 Wettstetten (DE); SIMON, Dominik, 63829 Krombach (DE)
(74) Vertreter: Askaryar, Jama
(86) Internationale Anmeldenummer: PCT/EP2015/002116
(87) Internationale Veröffentlichungsnummer: WO 2016/066255

(56) Entgegenhaltungen:
- EP-A1- 1 203 872
- EP-A1- 2 236 872
- DE-A1-102012 110 873
- NL-A- 7 606 882

## Beschreibung

Die Erfindung betrifft einen Abgasturbolader für eine Brennkraftmaschine, mit einer Turbine, einer strömungstechnisch parallel zu der Turbine vorgesehenen Bypassleitung und einem Querschnittsverstellelement zum Einstellen des Durchströmungsquerschnitts der Bypassleitung. Die Erfindung betrifft weiterhin ein Verfahren zum Herstellen eines Abgasturboladers.

Die Brennkraftmaschine dient beispielsweise dem Antreiben eines Kraftfahrzeugs, also dem Bereitstellen eines auf das Antreiben des Kraftfahrzeugs gerichteten Drehmoments. Die Brennkraftmaschine kann insoweit Bestandteil des Kraftfahrzeugs sein. Die Brennkraftmaschine weist den Abgasturbolader auf. Dieser dient dem Bereitstellen von Luft, insbesondere Frischluft, mit einem Druckniveau, welches über einem Druckniveau in einer Außenumgebung der Brennkraftmaschine liegt.

Dem Abgasturbolader beziehungsweise der Turbine des Abgasturboladers wird während des Betriebs der Brennkraftmaschine das von dieser erzeugte Abgas zugeführt. Das Abgas durchströmt beziehungsweise überströmt die Turbine, wobei in dem Abgas enthaltene Enthalpie beziehungsweise Strömungsenergie in kinetische Energie umgewandelt wird. Diese wird nachfolgend zum Betreiben eines Verdichters des Abgasturboladers herangezogen. Mithilfe des Verdichters wird Luft angesaugt, insbesondere aus der Außenumgebung, und verdichtet, also auf ein höheres Druckniveau gebracht. Die verdichtete Luft wird nachfolgend der Brennkraftmaschine zugeführt. Auf diese Art und Weise kann die Leistung und/oder die Effizienz der Brennkraftmaschine verbessert werden.

Es ist jedoch nicht in jedem Betriebszustand der Brennkraftmaschine sinnvoll, das gesamte erzeugte Abgas durch die Turbine zu führen. Aus diesem Grund ist strömungstechnisch parallel zu der Turbine die Bypassleitung vorgesehen, durch welche das Abgas um die Turbine herumströmen kann. Der Bypassleitung ist das Querschnittsverstellelement zugeordnet, mittels welchem ihr Durchströmungsquerschnitt eingestellt werden kann, vorzugsweise stetig.

Aus dem Stand der Technik ist beispielsweise die Druckschrift EP 2 236 872 A1 bekannt. Diese betrifft ein Abgasrückführungsventil, welches ein Ventilgehäuse sowie einen Kugelventilkörper aufweist. Auch die Druckschrift EP 1 203 872 A1 zeigt eine solche Anordnung. Es ist Aufgabe der Erfindung, einen Abgasturbolader für eine Brennkraftmaschine vorzuschlagen, welcher gegenüber dem bekannten Stand der Technik Vorteile aufweist, insbesondere eine zuverlässige Abdichtung sowie eine einfache Montage ermöglicht.

Dies wird erfindungsgemäß mit einem Abgasturbolader mit den Merkmalen des Anspruchs 1 erreicht. Dabei ist vorgesehen, dass das Querschnittsverstellelement als Kugelventil vorliegt, und dass ein Ventilelement des Kugelventils schwimmend in einem Ventilgehäuse gelagert und zwischen zwei ebenfalls in dem Ventilgehäuse vorgesehenen Lagerschalen angeordnet ist. Das Querschnittsverstellelement ist als Kugelventil ausgestaltet. Das bedeutet, dass das Ventilelement des Kugelventils wenigstens bereichsweise sphärisch beziehungsweise kugelförmig ist, wobei durch eine Drehbewegung des Ventilelements der gewünschte Durchströmungsquerschnitt der Bypassleitung einstellbar ist. Das Ventilelement des Kugelventils soll schwimmend in dem Ventilgehäuse gelagert sein. Darunter ist zu verstehen, dass das Ventilelement nicht lediglich drehbar in dem Ventilgehäuse angeordnet ist, sondern zudem in wenigstens eine andere Richtung mit Spiel vorliegt, also eine gewisse Bewegungsfreiheit aufweist. Beispielsweise liegt das Spiel in einer Richtung vor, die bezüglich einer Drehachse des Ventilelement angewinkelt ist, also einen Winkel von größer als 0° und kleiner als 180° mit ihr einschließt. Insbesondere steht die Richtung senkrecht auf der Drehachse.

Das Ventilelement ist zwischen den Lagerschalen angeordnet, welche ebenfalls in dem Ventilgehäuse angeordnet sind. An wenigstens einer der Lagerschalen liegt vorzugsweise ein Ventilsitz vor, mit welchem das Ventilelement zum Einstellen des Durchströmungsquerschnitts der Bypassleitung zusammenwirkt. In Abhängigkeit von einer Drehwinkelstellung des Ventilelements bezüglich der als Ventilsitz vorgesehenen Lagerschale kann insoweit der Durchströmungsquerschnitt vollständig versperrt, lediglich teilweise freigegeben oder vollständig freigegeben sein. Bedingt durch die schwimmende Lagerung des Ventilelements kann dieses - insbesondere bei wenigstens teilweise oder vollständig versperrtem Durchströmungsquerschnitt - durch das Abgas in Richtung des Ventilsitzes beziehungsweise in diesen hinein gedrängt beziehungsweise verlagert werden. Somit ist eine Selbstabdichtung des Kugelventils realisiert, wodurch auch bei auftretendem Verschleiß stets ein zuverlässiges Versperren, insbesondere ein vollständiges Versperren, gewährleistet ist.

Weiterhin können die Lagerschalen zur Bereitstellung von Endanschlägen für das Ventilelement vorgesehen sein. Erfindungsgemäß ist dabei das Ventilelement mit Spiel zwischen den Lagerschalen angeordnet. Das bedeutet, dass das Ventilelement stets an höchstens einer der Lagerschalen anliegt, während es von der jeweils anderen Lagerschale beabstandet angeordnet ist beziehungsweise zumindest nicht mit dieser in Berührkontakt steht. Selbstverständlich kann es auch vorgesehen sein, dass das Ventilelement derart angeordnet ist, dass es mit keiner der Lagerschalen in Berührkontakt steht, sondern vielmehr zwischen diesen vorliegt.

Vorteilhafterweise weisen die Lagerschalen jeweils eine teilkugelförmige Aufnahmeöffnung für das Ventilelement auf. Wie bereits erläutert, ist das Ventilelement zumindest teilweise, insbesondere vollständig, kugelförmig. Die Lagerschalen weisen nun komplementäre Aufnahmeöffnungen auf, die teilkugelförmig sind und insoweit zur Aufnahme eines Teils des Ventilelements ausgebildet sind.

Das Ventilelement verfügt vorzugsweise über einen zentralen Strömungskanal, während jede der Lagerschalen jeweils einen Strömungsdurchtritt aufweist, welcher insbesondere denselben Durchströmungsquerschnitt aufweist wie der Strömungskanal. Der Strömungsdurchtritt einer der Lagerschalen ist nun mit einem Strömungseinlass des Querschnittselements und der Strömungsdurchtritt der anderen Lagerschale mit einem Strömungsauslass unmittelbar strömungstechnisch verbunden.

In wenigstens einer Drehwinkelstellung des Ventilelements steht der Durchströmungsquerschnitt des Strömungskanals in Strömungsverbindung mit den Strömungsdurchtritten der Lagerschalen. Entsprechend kann Fluid von dem Strömungseinlass in Richtung des Strömungsauslasses strömen, wobei es die Strömungsdurchtritte sowie den Durchströmungsquerschnitt durchströmt. Besonders bevorzugt fluchtet der Durchströmungsquerschnitt in wenigstens einer Drehwinkelstellung des Ventilelements mit beiden Strömungsdurchtritten der Lagerschale, sodass ein möglichst geringer Strömungswiderstand realisiert ist. Dies wird insbesondere erzielt, indem der Strömungskanal denselben Durchströmungsquerschnitt aufweist wie die Strömungsdurchtritte.

Vorteilhafterweise besteht wenigstens eine der Lagerschalen aus einem elastischen Material. Insbesondere ist dies diejenige Lagerschale, an welcher der Ventilsitz des Querschnittselements vorliegt, mit welchem das Ventilelement zum Einstellen des Durchströmungsquerschnitts der Bypassleitung zusammenwirkt. Besonders bevorzugt sind jedoch beide Lagerschalen aus dem elastischen Material hergestellt. Mithilfe des elastischen Materials können Vibrationen des Ventilelements und daraus resultierende Geräusche vermindert oder gänzlich reduziert werden. Weiterhin wird die Dichtwirkung des Querschnittsverstellelements deutlich verbessert, sodass die Bypassleitung auch vollständig verschlossen werden kann.

In einer bevorzugten Ausgestaltung der Erfindung ist vorgesehen, dass das Ventilgehäuse eine Montageöffnung aufweist, durch welche das Ventilelement und die beiden Lagerschalen gemeinsam in das Ventilgehäuse einsetzbar sind. Wie bereits vorstehend erläutert, weisen die Lagerschalen jeweils die Aufnahmeöffnung für das Ventilelement auf. Diese kann teilkugelförmig ausgestaltet sein. Zur Montage des Abgasturboladers wird nun das Ventilelement in den Aufnahmeöffnungen der Lagerschalen angeordnet. Anschließend werden die Lagerschalen gemeinsam mit dem Ventilelement durch die Montageöffnung in das Ventilgehäuse eingesetzt. Die Montageöffnung weist insoweit entsprechende Abmessungen auf.

Mit einer derartigen Ausgestaltung des Ventilgehäuses ist eine einfache Montage sichergestellt, weil in lediglich einem einzigen Arbeitsschritt die Lagerschalen sowie das Ventilelement platziert werden können. Insbesondere ist in dem Ventilgehäuse eine Aufnahme für die Anordnung aus Ventilelement und den Lagerschalen vorgesehen, welche derart ausgebildet ist, dass die Lagerschalen und das Ventilelement nach dem Einbringen durch die Montageöffnung in die Aufnahme sicher in dieser gehalten sind, sodass lediglich ein Entnehmen der Anordnung durch die Montageöffnung möglich ist, jedoch nicht eine Verlagerung in eine andere Richtung.

Eine Weiterbildung der Erfindung sieht vor, dass die Montageöffnung mittels eines Deckels verschlossen ist, in welchem eine Durchtrittsöffnung für eine mit dem Ventilelement wirkverbundene Verstellwelle ausgebildet ist. Nach dem Einbringen der Anordnung aus Ventilelement und Lagerschale durch die Montageöffnung in die Aufnahme wird die Montageöffnung mithilfe des Deckels verschlossen. Um eine Betätigung beziehungsweise Verlagerung des Ventilelements zu ermöglichen, ist die Verstellwelle vorgesehen, welche mit dem Ventilelement wirkverbunden ist.

In dem Deckel ist nun die Durchtrittsöffnung vorgesehen, durch welche die Verstellwelle aus dem Ventilgehäuse herausragt. Auf der dem Ventilelement abgewandten Seite der Verstellwelle ist vorzugsweise eine Stelleinrichtung vorgesehen, welche grundsätzlich beliebig ausgestaltet sein kann. Beispielsweise ist die Stelleinrichtung jedoch elektrisch oder pneumatisch. Die Verstellwelle ist in der Durchtrittsöffnung drehbar angeordnet, beispielsweise in ihr drehbar gelagert.

In einer weiteren bevorzugten Ausgestaltung der Erfindung ist vorgesehen, dass der Deckel wenigstens einen Haltevorsprung aufweist, der an den Lagerschalen anliegt. Nach der Montage des Deckels an dem Ventilgehäuse liegt der Haltevorsprung an den Lagerschalen an. Beispielsweise sind mehrere Haltevorsprünge vorgesehen, wobei vorzugsweise jeder Lagerschale einer der Haltevorsprünge zugeordnet ist. Der Haltevorsprung beziehungsweise die Haltevorsprünge sind dazu ausgebildet, die Lagerschale in dem Ventilgehäuse festzusetzen, also ortsfest zu halten, beziehungsweise zumindest die Lagerschale in das Ventilgehäuse hineinzudrängen. Die Lagerschalen sind insoweit starr an dem beziehungsweise in dem Ventilgehäuse gehalten.

In einer weiteren Ausgestaltung der Erfindung ist vorgesehen, dass an dem Deckel ein Lagerelement befestigt ist, in welchem eine weitere Durchtrittsöffnung für die Verstellwelle vorliegt. Während der Deckel an dem Ventilgehäuse befestigt ist, beispielsweise mit diesem verschraubt ist, greift an den Deckel das Lagerelement an. Vorzugsweise ist das Lagerelement ausschließlich an dem Deckel befestigt und insoweit lediglich mittelbar mit dem Ventilgehäuse verbunden. Das Lagerelement wird von der Verstellwelle durchgriffen, wozu es die weitere Durchtrittsöffnung aufweist. Die Verstellwelle ist insoweit auch in der weiteren Durchtrittsöffnung drehbar angeordnet, insbesondere drehbar in ihr gelagert.

In einer weiteren Ausgestaltung der Erfindung kann vorgesehen sein, dass die Durchtrittsöffnung und/oder die weitere Durchtrittsöffnung einen Innendurchmesser aufweisen, der größer ist als der Außendurchmesser der Verstellwelle. Die Verstellwelle ist insoweit in der Durchtrittsöffnung und/oder der weiteren Durchtrittsöffnung in radialer Richtung bezüglich ihrer Drehachse nicht gehalten, sondern vielmehr mit Spiel angeordnet. Eine derartige Ausgestaltung der Durchtrittsöffnung beziehungsweise der weiteren Durchtrittsöffnung stellt insbesondere die schwimmende Lagerung des Ventilelements in dem Ventilgehäuse sicher. Das Ventilelement ist insoweit auch nicht über die Verstellwelle bezüglich des Ventilgehäuses festgesetzt, insbesondere nicht in radialer Richtung bezüglich der Drehachse.

Eine besonders bevorzugte Ausgestaltung der Erfindung sieht vor, dass zwischen dem Deckel und dem Lagerelement eine die Verstellwelle in Umfangsrichtung umgreifende, insbesondere in Umfangsrichtung durchgehend dichtend an ihr anliegende, Lagerhülse angeordnet ist. Die Lagerhülse ist zwischen dem Deckel und dem Lagerelement gehalten. Beispielsweise ist sie in einer Ausnehmung des Deckels vorgesehen, welche bei der Montage des Abgasturboladers mittels des Lagerelements verschlossen wird. Die Lagerhülse umgreift die Verstellwelle in Umfangsrichtung bezüglich ihrer Drehachse vorzugsweise vollständig. Dabei kann es vorgesehen sein, dass sie zudem dichtend an ihr anliegt, insbesondere über ihren gesamten Umfang hinweg.

Die Lagerhülse dient insoweit einer Lagerung der Verstellwelle bezüglich des Ventilgehäuses. Um dennoch die schwimmende Lagerung des Ventilelements sicherzustellen, besteht bevorzugt die Lagerhülse aus einem flexiblen, insbesondere elastischen Material. Während somit mithilfe der Lagerhülse einerseits eine Abdichtung des Ventilgehäuses realisiert ist, ist andererseits mittels der Lagerhülse die Verstellwelle mit Spiel in radialer Richtung bezüglich des Ventilgehäuses gelagert.

Eine weitere bevorzugte Ausgestaltung der Erfindung sieht vor, dass die Verstellwelle einstückig und/oder materialeinheitlich mit dem Ventilelement ausgebildet ist. Besonders bevorzugt wird die Verstellwelle gemeinsam mit dem Ventilelement hergestellt. Alternativ kann es selbstverständlich vorgesehen sein, dass die Verstellwelle getrennt von dem Ventilelement hergestellt und nachfolgend stoffschlüssig mit diesem verbunden wird, beispielsweise mittels Schweißen oder dergleichen. Von Bedeutung ist jedoch stets, dass die Verstellwelle starr mit dem Ventilelement verbunden ist. Zudem ist es vorteilhaft, wenn sie aus demselben Material besteht und insoweit materialeinheitlich mit dem Ventilelement vorliegt.

In einer weiteren Ausgestaltung der Erfindung ist vorgesehen, dass das Ventilgehäuse in einer Abgasleitung angeordnet ist, an die ein Turbinenauslass der Turbine angeschlossen ist, wobei die Abgasleitung im Querschnitt größer ist als das Ventilgehäuse, oder dass das Ventilgehäuse in einem Turbinengehäuse der Turbine integriert ist. Die Abgasleitung dient dem Abführen von Abgas von der Turbine. Insoweit schließt sich die Abgasleitung an einen Turbinenauslass der Turbine beziehungsweise eines Turbinengehäuses der Turbine an. Das Abgas, welches die Turbine durchströmt hat, wird mithilfe der Abgasleitung abgeführt, insbesondere in Richtung der Außenumgebung. Das Ventilgehäuse soll nun derart in der Abgasleitung angeordnet sein, dass es lediglich einen geringen Teil des Durchströmungsquerschnitts der Abgasleitung versperrt. Entsprechend ist die Abgasleitung so ausgebildet, sodass sie im Querschnitt größer ist als das Ventilgehäuse beziehungsweise einen Durchströmungsquerschnitt aufweist, welcher größer ist als der Querschnitt des Ventilgehäuses. Das aus der Turbine kommende Abgas strömt insoweit an dem Ventilgehäuse vorbei beziehungsweise umströmt dieses.

Alternativ kann es vorgesehen sein, dass das Ventilgehäuse in dem Turbinengehäuse der Turbine integriert ist. Vorzugsweise wird also das Ventilgehäuse von einem Bereich des Turbinengehäuses ausgebildet. Dabei liegt bevorzugt auch die Bypassleitung wenigstens teilweise, insbesondere vollständig, in dem Turbinengehäuse vor. Beispielsweise verbindet die Bypassleitung wenigstens einen Abgaseinlassanschluss des Turbinengehäuses mit einem Abgasauslassanschluss, an welchen insbesondere die Abgasleitung angeschlossen ist. Bevorzugt liegt insoweit das Querschnittsverstellelement beziehungsweise das Kugelventil mitsamt seinem Ventilgehäuse in dem Turbinengehäuse vor. Entsprechend ist das Querschnittsverstellelement in der Bypassleitung angeordnet.

Ist der Abgasturbolader einflutig ausgestaltet, so liegt nur ein Abgaseinlassanschluss vor. Ist er mehrflutig, so ist jeder Flut ein Abgaseinlassanschluss zugeordnet. Vorzugsweise steht die Bypassleitung mit allen Abgaseinlassanschlüssen in Strömungsverbindung. Mittels des Querschnittsverstellelements, das zum Einstellen des Durchströmungsquerschnitts dient, kann nun der Anteil des Abgases eingestellt werden, der um die Turbine herum geführt wird, also durch die Bypassleitung von dem wenigstens einen Abgaseinlassanschluss zu dem Abgasauslassanschluss strömt.

Es kann in einer weiteren Ausgestaltung der Erfindung vorgesehen sein, dass die Bypassleitung sich ausgehend von der Turbine in die Abgasleitung hinein bis zu einem Strömungseinlass des Ventilgehäuses erstreckt. Die Bypassleitung ist stromaufwärts der Turbine angeschlossen. Insbesondere ist in dem Turbinengehäuse zu diesem Zweck ein Bypassanschluss ausgebildet, mit welchem die Bypassleitung strömungsverbunden ist. Die Bypassleitung ragt nun ausgehend von der Turbine beziehungsweise dem Turbinengehäuse in die Abgasleitung hinein, bis hin zu dem Strömungseinlass des Ventilgehäuses. Bevorzugt ist dabei der Strömungseinlass des Ventilgehäuses beabstandet von dem Turbinenauslass der Turbine in der Abgasleitung angeordnet. Insbesondere beträgt der Abstand bezogen auf einen Innendurchmesser der Abgasleitung mindestens 0,1, mindestens 0,25, mindestens 0,5, mindestens 0,75 oder mindestens 1,0.

Schließlich kann im Rahmen einer weiteren Gestaltung der Erfindung vorgesehen sein, dass das Ventilgehäuse einen Strömungsauslass aufweist, der sich in von dem Ventilelement abgewandter Richtung aufweitet. Durch den Strömungsauslass kann das durch die Bypassleitung strömende Fluid aus dem Ventilgehäuse herausgelangen. Insbesondere ist der Strömungsauslass in der Abgasleitung angeordnet, sodass sich das durch die Bypassleitung um die Turbine herumgeführte Abgas mit demjenigen Abgas vermengt, welches die Turbine durchströmt hat. Besonders bevorzugt ist der Strömungsauslass als Diffusor ausgebildet, weitet sich also in die von dem Ventilelement beziehungsweise Turbine abgewandte Richtung auf. Das bedeutet, dass der Durchströmungsquerschnitt des Strömungsauslasses in dieser Richtung größer wird, vorzugsweise stetig beziehungsweise kontinuierlich.

Die Erfindung betrifft weiterhin ein Verfahren zum Herstellen eines Abgasturboladers für eine Brennkraftmaschine, insbesondere eines Abgasturboladers gemäß den vorstehenden Ausführungen, wobei der Abgasturbolader eine Turbine, eine strömungstechnisch parallel zu der Turbine vorgesehenen Bypassleitung und ein Querschnittsverstellelement zum Einstellen des Durchströmungsquerschnitts der Bypassleitung aufweist. Dabei ist vorgesehen, dass das Querschnittsverstellelement als Kugelventil vorliegt, und dass ein Ventilelement des Kugelventils schwimmend in einem Ventilgehäuse gelagert und zwischen zwei ebenfalls in dem Ventilgehäuse vorgesehenen Lagerschalen angeordnet wird.

Auf die Vorteile einer derartigen Ausgestaltung der Brennkraftmaschine beziehungsweise eines derartigen Verfahrens wurde bereits hingewiesen. Sowohl das Verfahren als auch die Brennkraftmaschine können gemäß den vorstehenden Ausführungen weitergebildet sein, sodass insoweit auf diese verwiesen wird.

Insbesondere ist es im Rahmen des Verfahrens vorgesehen, dass das Ventilelement sowie die beiden Lagerschalen gemeinsam durch die Montageöffnung des Ventilgehäuses in dieses hinein beziehungsweise in dessen Aufnahme eingesetzt werden. Ebenfalls wird vorzugsweise nachfolgend die Montageöffnung mittels des Deckels verschlossen. Auf diese Art und Weise ist eine einfache Montage des Abgasturboladers sichergestellt.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine Längsschnittdarstellung durch einen Abgasturbolader für eine Brennkraftmaschine, wobei in einer Abgasleitung ein Querschnittsverstellelement zum Einstellen des Durchströmungsquerschnitts einer Bypassleitung angeordnet ist,
- Figur 2: eine Explosionsdarstellung des Querschnittsverstellelements,
- Figur 3: eine Detailschnittdarstellung des Querschnittsverstellelements, sowie
- Figur 4: eine Längsschnittdarstellung durch einen Abgasturbolader in einer weiteren Ausführungsform.

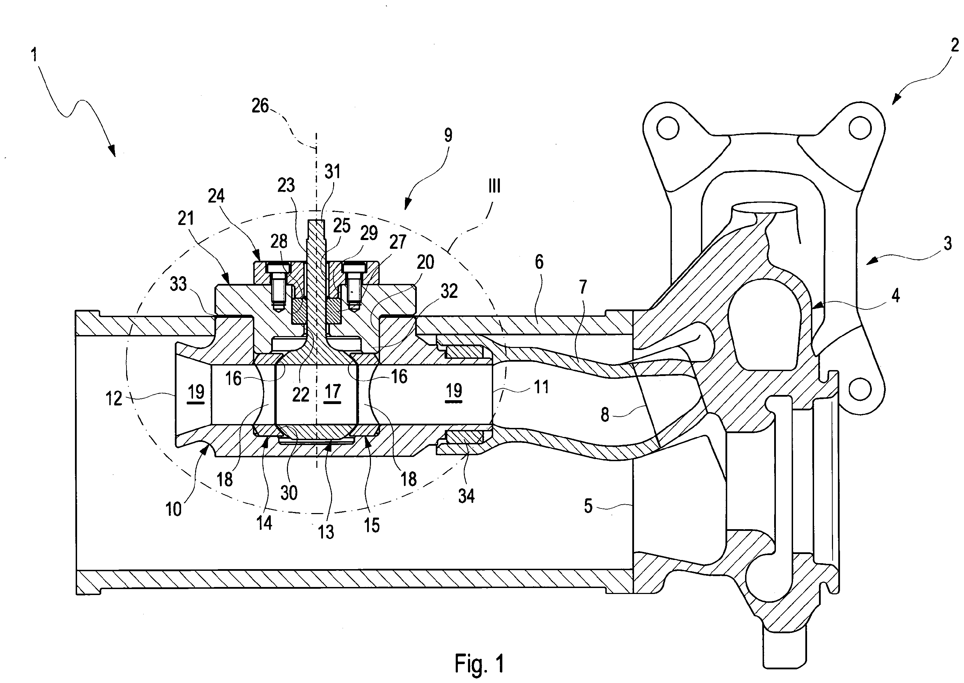

Die Figur 1 zeigt eine Längsschnittdarstellung durch einen Bereich einer Brennkraftmaschine 1, insbesondere durch einen Bereich eines Abgasturboladers 2. Der Abgasturbolader 2 weist eine Turbine 3 mit einem Turbinengehäuse 4 sowie einem in dem Turbinengehäuse 4 angeordneten Turbinenlaufzeug beziehungsweise Turbinenlaufrad auf. An einen Turbinenauslass 5 des Turbinengehäuses 4, durch welchen Abgas nach dem Durchströmen der Turbine 3 ausströmt, ist eine Abgasleitung 6 angeschlossen. Diese dient dem Abführen des Abgases, beispielsweise in Richtung einer Außenumgebung.

Die Turbine 3 weist weiterhin eine Bypassleitung 7 auf, welche beispielsweise an einen Bypassanschluss 8 des Turbinengehäuses 4 angeschlossen ist. Die Bypassleitung 7 beziehungsweise der Bypassanschluss 8 sind stromaufwärts des Turbinenlaufrads angeschlossen und liegen insoweit parallel zu der Turbine 3 beziehungsweise dem Turbinenlaufrad vor. Das der Turbine 3 zugeführte Abgas, beispielsweise von der Brennkraftmaschine 1 kommend, kann insoweit entweder die Turbine 3 durchströmen beziehungsweise das Turbinenlaufrad überströmen oder alternativ durch die Bypassleitung 7 an der Turbine 3 beziehungsweise dem Turbinenlaufrad vorbeigeführt werden.

Der Bypassleitung 7 ist ein Querschnittsverstellelement 9 zugeordnet, das zum Einstellen des Durchströmungsquerschnitts der Bypassleitung 7 dient. Mithilfe des Querschnittsverstellelements 9 kann insoweit die Strömungsverbindung durch die Bypassleitung 7 versperrt, teilweise freigegeben oder vollständig freigegeben werden.

Das Querschnittsverstellelement 9 ist als Kugelventil ausgebildet. Es verfügt über ein Ventilgehäuse 10, welches einen Strömungseinlass 11 sowie einen Strömungsauslass 12 aufweist. Der Strömungseinlass 11 ist an die Bypassleitung 7 angeschlossen. Beispielsweise ragt dazu das Ventilgehäuse 10 bereichsweise in die Bypassleitung 7 hinein beziehungsweise wird von dieser umgriffen, wie dies in dem hier dargestellten Ausführungsbeispiel der Fall ist. Das Querschnittsverstellelement 9 weist ein Ventilelement 13 auf, welches schwimmend in dem Ventilgehäuse 10 gelagert ist. Beidseitig neben dem Ventilelement 13 sind Lagerschalen 14 und 15 in dem Ventilgehäuse 10 angeordnet.

Das Ventilelement 10 ist im Wesentlichen sphärisch beziehungsweise kugelförmig. Die Lagerschalen 14 und 15 weisen jeweils eine Aufnahmeöffnung 16 auf, in welche das Ventilelement 13 teilweise eingreift. Das Ventilelement 13 weist einen Strömungskanal 17 auf, welcher beispielsweise zentral in ihm ausgebildet ist und ihn vollständig durchgreift. Beispielsweise verfügt der Strömungskanal 17 über einen kreisrunden Querschnitt. In den Lagerschalen ist jeweils ein Strömungsdurchtritt 18 ausgebildet. Dieser weist vorzugsweise denselben Durchströmungsquerschnitt auf wie der Strömungskanal 17, sodass in wenigstens einer Drehwinkelstellung des Ventilelements 13 die Strömungsdurchtritte 18 der Lagerschalen 14 und 15 mit dem Strömungskanal 17 fluchtend angeordnet sind.

Vorzugsweise liegt in dem Ventilgehäuse 10 zudem ein Strömungskanal 19 vor, welcher einerseits an den Strömungseinlass 11 und andererseits an den Strömungsauslass 12 angeschlossen ist. Der Strömungskanal 19 weist vorzugsweise einen konstanten Durchströmungsquerschnitt auf. Insbesondere entspricht sein Durchströmungsquerschnitt demjenigen des Strömungskanals 17 beziehungsweise der Strömungsdurchtritte 18. Es kann jedoch vorgesehen sein, dass der Strömungsauslass 12 sich in die von dem Ventilelement 13 abgewandte Richtung aufweitet, sodass insoweit der Strömungsauslass 12 als Diffusor ausgestaltet ist. In dem Strömungskanal sind das Ventilelement 13 sowie die Lagerschalen 14 und 15 angeordnet.

Es ist erkennbar, dass das Ventilgehäuse 10 eine Montageöffnung 20 aufweist, durch welche das Ventilelement 13 und die beiden Lagerschalen 14 und 15 gemeinsam in das Ventilgehäuse 10 einsetzbar sind. Die Montageöffnung 20 weist dabei entsprechende Ausnehmungen auf. Die Montageöffnung 20 ist mittels eines Deckels 21 verschlossen, welcher vorzugsweise an dem Ventilgehäuse 10 unmittelbar befestigt ist, insbesondere mit diesem verschraubt ist. In dem Deckel 21 ist eine Durchtrittsöffnung 22 vorgesehen. In dieser ist eine Verstellwelle 23 angeordnet, welche mit dem Ventilelement 13 zumindest wirkverbunden ist. Besonders bevorzugt ist die Verstellwelle 23 jedoch einstückig und/oder materialeinheitlich mit dem Ventilelement 13 ausgebildet.

An dem Deckel 21 ist ein Lagerelement 24 angeordnet, insbesondere an dem Deckel 21 befestigt, vorzugsweise mit diesem verschraubt. Das Lagerelement 24 weist eine weitere Durchtrittsöffnung 25 auf, durch welche die Verstellwelle 23 hindurchragt. Besonders bevorzugt weisen die Durchtrittsöffnung 22 und die Durchtrittsöffnung 25 Innendurchmesser auf, welche größer sind als der Außendurchmesser der Verstellwelle 23. Das bedeutet, dass die Verstellwelle 23 schwimmend in der Durchtrittsöffnung 22 und der Durchtrittsöffnung 25 gelagert ist, also in radialer Richtung bezüglich einer Drehachse 26 der Verstellwelle 23 nicht vollständig festgesetzt, sondern vielmehr mit Spiel gelagert ist.

Zwischen dem Deckel 21 und dem Lagerelement 24 ist eine Lagerhülse 27 angeordnet, vorzugsweise zwischen dem Deckel 21 und dem Lagerelement 24 klemmend gehalten. Die Lagerhülse 27 liegt mit ihrem Außenumfang vorzugsweise an einer Wandung 28, beispielsweise einer Ausnehmung 29 des Deckels 21 an. In axialer Richtung bezüglich der Drehachse 26 liegt die Lagerhülse 27 sowohl an dem Deckel 21 als auch dem Lagerelement 24 an. Insbesondere hält dabei das Lagerelement 24 die Lagerhülse 27 in der Ausnehmung 29. Beispielsweise ragt dazu das Lagerelement 24 bereichsweise in die Ausnehmung 29 hinein. Die Lagerhülse 27 umgreift die Verstellwelle 23 in Umfangsrichtung bezüglich der Drehachse 26 vollständig. Insbesondere liegt sie in Umfangsrichtung durchgehend an der Verstellwelle 23 an, insbesondere dichtend. Zu diesem Zweck ist beispielsweise die Lagerhülse 27 aus einem elastischen Material hergestellt.

Die Lagerhülse 27 lässt insoweit eine Bewegung der Verstellwelle in radialer Richtung bezüglich der Drehachse 26 innerhalb eines bestimmten Spiels zu. Dies hat den Vorteil, dass auch das Ventilelement 13 innerhalb des Ventilgehäuses 10 nicht vollständig in radialer Richtung festgesetzt ist. Entsprechend kann der bei zumindest teilweise geschlossenem Querschnittsverstellelement 9 auf das Ventilelement 13 wirkende Abgasdruck das Ventilelement 10 in Richtung eines der Lagerschalen 14 und 15, insbesondere in Richtung der Lagerschale 14 drängen. In dieser ist ein Ventilsitz 30 des Querschnittsverstellelements 9 ausgebildet. Beispielsweise ist zumindest die Lagerschale 14 ebenfalls aus einem elastischen Material realisiert, vorzugsweise kann dies auch für die Lagerschale 15 gelten.

Die Lagerschalen 14 und 15 können jedoch auch aus einem Verbundmaterial hergestellt sein, insbesondere bestehend aus einem Metallgeflecht beziehungsweise einem Metallgestrick, in welcher ein weiteres Material eingebettet ist. Dieses weitere Material kann besonders bevorzugt einen Festschmierstoff, beispielsweise Graphit oder dergleichen aufweisen. Auf ihrer dem Ventilelement 13 abgewandten Seite weist die Verstellwelle 23 ein Drehmomentübertragungselement 31 auf. Dieses zeichnet sich beispielsweise durch einen unrunden Querschnitt, insbesondere einen mehreckigen Querschnitt, aus. Beispielsweise greift eine Antriebseinrichtung des Querschnittsverstellelements 9 an dem Drehmomentübertragungselement 31 an. Die Antriebseinrichtung kann beispielsweise elektrisch oder pneumatisch ausgebildet sein.

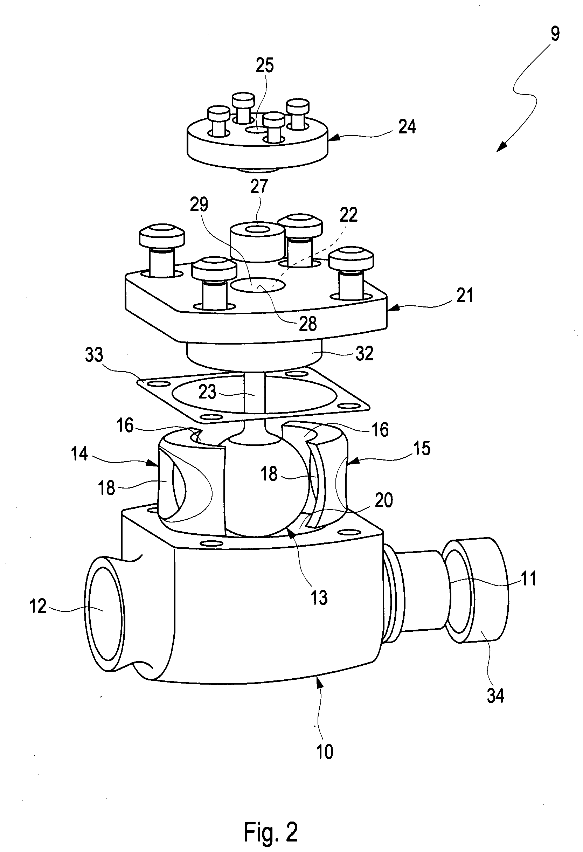

Die Figur 2 zeigt eine Explosionsdarstellung des Querschnittsverstellelements 9. Hinsichtlich der Beschreibung der einzelnen Elemente wird auf die vorstehenden Ausführungen verwiesen. Es wird deutlich, dass der Deckel 21 wenigstens einen Haltevorsprung 32 aufweist, welcher beispielsweise hohlzylinderförmig, insbesondere hohlkreiszylinderförmig ausgebildet ist und nach der Montage des Abgasturboladers 2 in das Ventilgehäuse 10 eingreift. Dort liegt der Haltevorsprung 32 an den Lagerschalen 14 und 15 an und drängt diese in das Ventilgehäuse 10 beziehungsweise hält sie in diesem.

Weiterhin ist zwischen dem Deckel 21 und dem Ventilgehäuse 10 eine Dichtung 33 vorgesehen, welche in Umfangsrichtung bezüglich der Drehachse 26 die gesamte Montageöffnung 20 umgreift. Auf das Ventilgehäuse 10 ist auf der Seite des Strömungseinlasses 11 ein Befestigungsring 34 aufgesteckt. Dieser liegt mit seinem Innenumfang vorzugsweise durchgehend an dem Ventilgehäuse an. Mit seinem Außenumfang liegt es dagegen an einem Innenumfang der Bypassleitung 7 an, sodass das Querschnittsverstellelement 9 dicht an die Bypassleitung 7 angeschlossen ist. Der Befestigungsring 34 kann insoweit auch als Dichtring ausgestaltet sein.

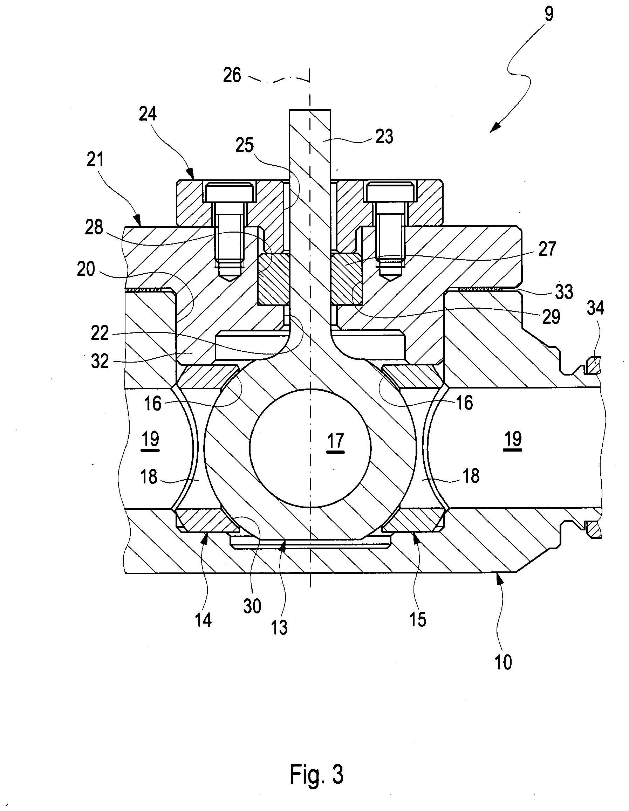

Die Figur 3 zeigt eine Detailschnittansicht des Querschnittsverstellelements 9. Es ist erneut deutlich zu erkennen, dass die Innendurchmesser der Durchtrittsöffnungen 22 und 25 größer sind als der Außendurchmesser der Verstellwelle 23. Die Lagerhülse 27 liegt dagegen dicht an der Verstellwelle 23 an. Beispielsweise bestehen der Deckel 21 und/oder das Lagerelement 24 aus einem steifen Material, insbesondere Metall. Um insoweit die Verstellwelle 23 in radialer Richtung bezüglich der Drehachse 26 in dem Ventilgehäuse 10 nicht vollständig festzusetzen, sondern vielmehr mit einem bestimmten Spiel zu lagern, ist aus diesem Grund die Lagerhülse 27 vorgesehen, welche insbesondere aus einem elastischen Material besteht.

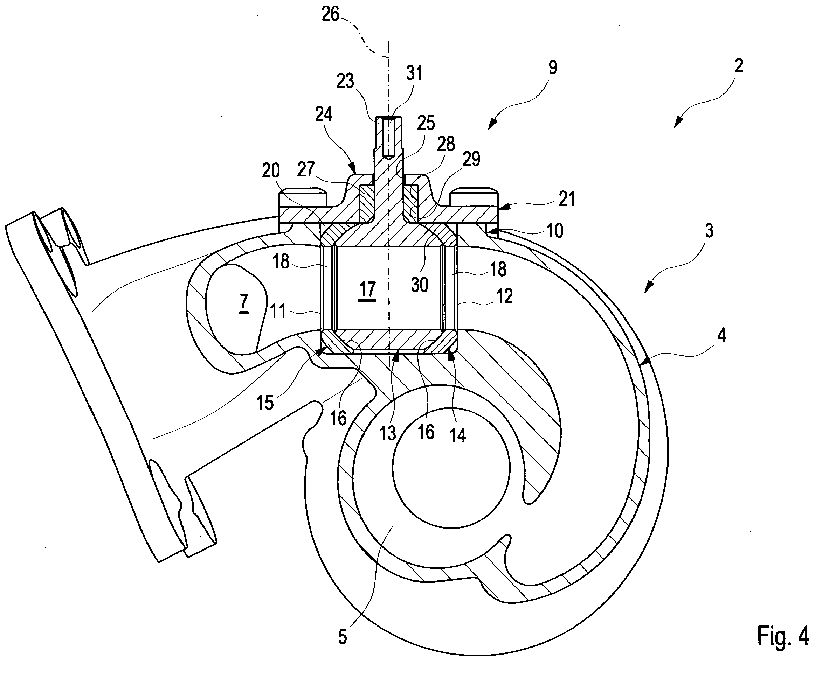

Die Figur 4 zeigt den Abgasturbolader 2 in einer weiteren Ausführungsform. Diese ähnelt grundsätzlich der bereits beschriebenen ersten Ausführungsform, sodass ausdrücklich auf die vorstehenden Ausführungen Bezug genommen wird. Der wesentliche Unterschied zu der ersten Ausführungsform liegt in der Integration des Ventilgehäuses 10 in das Turbinengehäuse 4. Zudem ist die Bypassleitung 7 ebenfalls nur in dem Turbinengehäuse 4 ausgebildet. Mittels der Bypassleitung 7 kann eine Strömungsverbindung zwischen einem Abgaseinlassanschluss des Turbinengehäuses 4 und dem Turbinenauslass 5 beziehungsweise Abgasauslassanschluss hergestellt werden. In der Bypassleitung 7 ist das Querschnittsverstellelement 9 vorgesehen, mittels welchem der Durchströmungsquerschnitt der Bypassleitung 7 einstellbar ist.

Das Ventilelement 13 und die Lagerschalen 14 sowie 15 sind wie bereits erläutert in dem Ventilgehäuse 10 und somit in der hier gezeigten Ausführungsform unmittelbar in dem Turbinengehäuse 4 angeordnet. Das Turbinengehäuse 4 weist beispielsweise zumindest einige, insbesondere alle, der vorstehend beschriebenen Eigenschaften des Ventilgehäuses 10 auf. So ist die Montageöffnung nur direkt in dem Turbinengehäuse 4 ausgebildet. Ein weiterer Unterschied zu der ersten Ausführungsform liegt darin, dass das Lagerelement 24 einstückig und materialeinheitlich mit dem Deckel 21 ausgestaltet ist. Die Lagerhülse 27 wird von dem Deckel 21 beispielsweise in Richtung des Ventilelements 13 gedrängt, insbesondere auf das Ventilelement 13, sodass die Lagerhülse 27 an dem Ventilelement 13 anliegt. In der ersten Ausführungsform ist das Ventilelement 13 von der Lagerhülse 27 beabstandet angeordnet. Entsprechend liegt in der zweiten Ausführungsform nicht wie in der ersten Ausführungsform eine dedizierte Durchtrittsöffnung 22 vor, welche Innenabmessungen aufweist, die kleiner sind als die Außenabmessungen der Lagerhülse 27.

Das Drehmomentübertragungselement 31 kann in der zweiten Ausführungsform als Innenmehrkant ausgestaltet sein. Die Lagerschalen 14 und 15 durchgreifen die Montageöffnung 20 vollständig oder zumindest nahezu vollständig. Entsprechend sind die für die erste Ausführungsform beschriebenen Haltevorsprünge 32 des Deckels 21 nicht notwendig. Vielmehr kann der Deckel 21 auf seiner der Montageöffnung 20 zugewandten Seite plan sein beziehungsweise eine plane Fläche aufweisen. Diese Fläche liegt an den Lagerschalen 14 und 15 an und drängt diese in das Turbinengehäuse 4 beziehungsweise hält sie dort.

## Patentansprüche

1. Abgasturbolader (2) für eine Brennkraftmaschine (1), mit einer Turbine (3), einer strömungstechnisch parallel zu der Turbine (3) vorgesehenen Bypassleitung (7) und einem Querschnittsverstellelement (9) zum Einstellen des Durchströmungsquerschnitts der Bypassleitung (7), **dadurch gekennzeichnet, dass** das Querschnittsverstellelement (9) als Kugelventil vorliegt, und dass ein Ventilelement (13) des Kugelventils (9) schwimmend in einem Ventilgehäuse (10) gelagert und mit Spiel in einer bezüglich einer Drehachse des Ventilelements (13) angewinkelten Richtung zwischen zwei ebenfalls in dem Ventilgehäuse (10) vorgesehenen Lagerschalen (14,15) angeordnet ist.

2. Abgasturbolader nach Anspruch 1, **dadurch gekennzeichnet, dass** das Ventilgehäuse (10) eine Montageöffnung (20) aufweist, durch welche das Ventilelement (13) und die beiden Lagerschalen (14,15) gemeinsam in das Ventilgehäuse (10) einsetzbar sind.

3. Abgasturbolader nach einem der vorhergehenden Ansprüche, **dadurch gekennzeichnet, dass** die Montageöffnung (20) mittels eines Deckels (21) verschlossen ist, in welchem eine Durchtrittsöffnung (22) für eine mit dem Ventilelement (13) wirkverbundene Verstellwelle (23) ausgebildet ist.

4. Abgasturbolader nach einem der vorhergehenden Ansprüche, **dadurch gekennzeichnet, dass** an dem Deckel (21) ein Lagerelement (24) befestigt ist, in welchem eine weitere Durchtrittsöffnung (25) für die Verstellwelle (23) vorliegt.

5. Abgasturbolader nach einem der vorhergehenden Ansprüche, **dadurch gekennzeichnet, dass** die Durchtrittsöffnung (22) und/oder die weitere Durchtrittsöffnung (25) einen Innendurchmesser aufweisen, der größer ist als der Außendurchmesser der Verstellwelle (23).

6. Abgasturbolader nach einem der vorhergehenden Ansprüche, **dadurch gekennzeichnet, dass** zwischen dem Deckel (21) und dem Lagerelement (24) eine die Verstellwelle (23) in Umfangsrichtung umgreifende, insbesondere in Umfangsrichtung durchgehend dichtend an ihr anliegende, Lagerhülse (27) angeordnet ist.

7. Abgasturbolader nach einem der vorhergehenden Ansprüche, **dadurch gekennzeichnet, dass** die Verstellwelle (23) einstückig und/oder materialeinheitlich mit dem Ventilelement (13) ausgebildet ist.

8. Abgasturbolader nach einem der vorhergehenden Ansprüche, **dadurch gekennzeichnet, dass** das Ventilgehäuse (10) in einer Abgasleitung (6) angeordnet ist, an die ein Turbinenauslass (5) der Turbine (3) angeschlossen ist, wobei die Abgasleitung (6) im Querschnitt größer ist als das Ventilgehäuse (10), oder dass das Ventilgehäuse (10) in einem Turbinengehäuse (4) der Turbine (3) integriert ist.

9. Abgasturbolader nach einem der vorhergehenden Ansprüche, **dadurch gekennzeichnet, dass** das Ventilgehäuse (10) einen Strömungsauslass (12) aufweist, der sich in von dem Ventilelement (13) abgewandter Richtung aufweitet.

10. Verfahren zum Herstellen eines Abgasturboladers (2) für eine Brennkraftmaschine (1), insbesondere eines Abgasturboladers (2) gemäß einem oder mehreren der vorhergehenden Ansprüche, wobei der Abgasturbolader (2) eine Turbine (3), eine strömungstechnisch parallel zu der Turbine (3) vorgesehene Bypassleitung (7) und ein Querschnittsverstellelement (9) zum Einstellen des Durchströmungsquerschnitts der Bypassleitung (7) aufweist, **dadurch gekennzeichnet, dass** das Querschnittsverstellelement (9) als Kugelventil vorliegt, und dass ein Ventilelement (13) des Kugelventils (9) schwimmend in einem Ventilgehäuse (10) gelagert und mit Spiel in einer bezüglich einer Drehachse des Ventilelements (13) angewinkelten Richtung zwischen zwei ebenfalls in dem Ventilgehäuse (10) vorgesehenen Lagerschalen (14,15) angeordnet wird.

## Claims

1. Exhaust-gas turbocharger (2) for an internal combustion engine (1), with a turbine (3), a bypass line (7) provided in parallel to the turbine (3) in the sense of flow, and a cross-section adjustment element (9) for adjusting the through-flow cross-section of the bypass line (7), **characterised in that** the cross-section adjustment element (9) is provided in the form of a ball valve, and a valve element (13) of the ball valve (9) is mounted in a floating manner in a valve housing (10) and is arranged with clearance between two bearing shells (14, 15) which are likewise arranged in the valve housing (10) in a direction at an angle with respect to a rotary axis of the valve element (13).

2. Exhaust-gas turbocharger according to claim 1, **characterised in that** the valve housing (10) comprises a mounting opening (20) through which the valve element (13) and the two bearing shells (14, 15) can be inserted together into the valve housing (10).

3. Exhaust-gas turbocharger according to any of the preceding claims, **characterised in that** the mounting opening (20) is closed by means of a lid (21) in which an opening (22) for an adjustment shaft (23) which is operatively connected to the valve element (13) is formed.

4. Exhaust-gas turbocharger according to any of the preceding claims, **characterised in that** a bearing element (24) is mounted at the lid (21) in which a further opening (25) for the adjustment shaft (23) is provided.

5. Exhaust-gas turbocharger according to any of the preceding claims, **characterised in that** the opening (22) and/or the further opening (25) have an inner diameter which is larger than the outer diameter of the adjustment shaft (23).

6. Exhaust-gas turbocharger according to any of the preceding claims, **characterised in that** between the lid (21) and the bearing element (24) a bearing bushing (27) is arranged encompassing the adjustment shaft (23) in a circumferential direction, in particular abutting the adjustment shaft in a circumferential direction in a continuously sealing manner.

7. Exhaust-gas turbocharger according to any of the preceding claims, **characterised in that** the adjustment shaft (23) is integrally formed and/or is formed materially integrally with the valve element (13).

8. Exhaust-gas turbocharger according to any of the preceding claims, **characterised in that** the valve housing (10) is arranged in an exhaust pipe (6) to which a turbine outlet (5) of the turbine (3) is connected, wherein the exhaust pipe (6) is larger in diameter than the valve housing (10), or the valve housing (10) is integrated in a turbine housing (4) of the turbine (3).

9. Exhaust-gas turbocharger according to any of the preceding claims, **characterised in that** the valve housing (10) comprises a flow outlet (12) which widens in a direction facing away from the valve element (13).

10. Method for producing an exhaust-gas turbocharger (2) for an internal combustion engine (1), in particular an exhaust-gas turbocharger (2) according to one or more of the preceding claims, wherein the exhaust-gas turbocharger (2) comprises a turbine (3), a bypass line (7) provided in parallel to the turbine (3) in the sense of flow, and a cross-section adjustment element (9) for adjusting the through-flow cross-section of the bypass line (7), **characterised in that** the cross-section adjustment element (9) is provided in the form of a ball valve, and a valve element (13) of the ball valve (9) is mounted in a floating manner in a valve housing (10) and is arranged with clearance between two bearing shells (14, 15) which are likewise arranged in the valve housing (10) in a direction at an angle with respect to a rotary axis of the valve element (13).

## Revendications

1. Turbocompresseur (2) destiné à un moteur à combustion interne (1), avec une turbine (3), avec une conduite de dérivation (7) prévue parallèlement à la turbine (3) du point de vue de la technique des fluides et avec un élément d'ajustement de section transversale (9) destiné à ajuster la section transversale d'écoulement de la conduite de dérivation (7), **caractérisé en ce que** l'élément d'ajustement de section transversale (9) se présente sous la forme d'une soupape à bille et **en ce qu'**un élément de soupape (13) de la soupape à bille (9) est logé de manière à flotter dans un corps de soupape (10) et est agencé, avec du jeu dans une direction formant un angle avec un axe de rotation de l'élément de soupape (13), entre deux coquilles de palier (14, 15) également prévues dans le corps de soupape (10).

2. Turbocompresseur selon la revendication 1, **caractérisé en ce que** le corps de soupape (10) comporte une ouverture de montage (20) à travers laquelle l'élément de soupape (13) et les deux coquilles de palier (14, 15) peuvent être placés ensemble dans le corps de soupape (10).

3. Turbocompresseur selon l'une quelconque des revendications précédentes, **caractérisé en ce que** l'ouverture de montage (20) est fermée au moyen d'un couvercle (21) dans lequel est réalisée une ouverture de passage (22) destinée à un arbre d'ajustement (23) en liaison active avec l'élément de soupape (13).

4. Turbocompresseur selon l'une quelconque des revendications précédentes, **caractérisé en ce qu'**un élément de coussinet (24) dans lequel existe une autre ouverture de passage (25) destinée à l'arbre d'ajustement (23) est fixé au niveau du couvercle (21).

5. Turbocompresseur selon l'une quelconque des revendications précédentes, **caractérisé en ce que** l'ouverture de passage (22) et/ou l'autre ouverture de passage (25) ont un diamètre intérieur qui est supérieur au diamètre extérieur de l'arbre d'ajustement (23).

6. Turbocompresseur selon l'une quelconque des revendications précédentes, **caractérisé en ce qu'**un coussinet de palier (27), qui entoure l'arbre d'ajustement (23) dans la direction circonférentielle, en particulier qui s'appuie en continu et de manière étanche contre lui dans la direction circonférentielle, est agencé entre le couvercle (21) et l'élément de palier (24).

7. Turbocompresseur selon l'une quelconque des revendications précédentes, **caractérisé en ce que** l'arbre d'ajustement (23) est réalisé d'un seul tenant avec l'élément de soupape (13) et/ou dans le même matériau que celui-ci.

8. Turbocompresseur selon l'une quelconque des revendications précédentes, **caractérisé en ce que** le corps de soupape (10) est agencé dans une conduite de gaz d'échappement (6) à laquelle est raccordée une sortie de turbine (5) de la turbine (3), laquelle conduite de gaz d'échappement (6) est plus grande en section transversale que le corps de soupape (10), ou **en ce que** le corps de soupape (10) est intégré dans un corps de turbine (4) de la turbine (3).

9. Turbocompresseur selon l'une quelconque des revendications précédentes, **caractérisé en ce que** le corps de soupape (10) comporte une sortie d'écoulement (12) qui s'élargit dans la direction allant à l'opposé de l'élément de soupape (13).

10. Procédé de fabrication d'un turbocompresseur (2) destiné à un moteur à combustion interne (1), en particulier d'un turbocompresseur (2) selon une ou plusieurs des revendications précédentes, dans lequel le turbocompresseur (2) comporte une turbine (3), une conduite de dérivation (7) prévue parallèlement à la turbine (3) du point de vue de la technique des fluides et un élément d'ajustement de section transversale (9) destiné à ajuster la section transversale d'écoulement de la conduite de dérivation (7), **caractérisé en ce que** l'élément d'ajustement de section transversale (9) se présente sous la forme d'une soupape à bille et **en ce qu'**un élément de soupape (13) de la soupape à bille (9) est logé de manière à flotter dans un corps de soupape (10) et est agencé, avec du jeu dans une direction formant un angle avec un axe de rotation de l'élément de soupape (13), entre deux coquilles de palier (14, 15) également prévues dans le corps de soupape (10).
